# EUROPEAN PATENT SPECIFICATION

(11) **EP 3 409 993 B1**
(45) Date of publication and mention of the grant of the patent: **20.04.2022**
(21) Application number: 17382305.5
(22) Date of filing: 29.05.2017
(51) Int. Cl.: F16L 23/08, F23J 13/04

(54) **TUBE FOR TRANSPORTING FLUIDS AND COUPLING SYSTEM**
ROHR ZUM TRANSPORT VON FLÜSSIGKEITEN UND KUPPLUNGSSYSTEM
TUBE POUR LE TRANSPORT DE FLUIDES ET SYSTÈME DE COUPLAGE

(43) Date of publication of application: 05.12.2018
(73) Proprietor: JEREMIAS ESPAÑA S.A., 48340 Amorebieta (Bizkaia) (ES)
(72) Inventor: Abascal Santos, José Manuel, 48340 Amorebieta (Vizcaya) (ES)
(74) Representative: Carlos Hernando, Borja

(56) References cited:
- DE-A1- 3 509 774
- DE-U1- 20 210 002
- FR-A1- 2 687 208
- FR-A1- 2 772 109

## Description

### OBJECT OF THE INVENTION

The present invention relates to a tube for transporting fluids, preferably combustion gases, and a system for coupling said tubes, which enables the simple assembly thereof and improves the sealing of the couplings and, for such purpose, each tube comprises a chamber on one of its ends and an annular protrusion on the body of the tube.

The present invention falls within the tube manufacturing sector, particularly tubes formed by expansion.

### BACKGROUND OF THE INVENTION

In the state of the art, tubes are known that comprise a chamber on one of their mouths in which a sealing gasket is introduced and a second tube is subsequently introduced through said mouth, the outer diameter of which is approximately equal to the inner diameter of the first tube, thereby achieving a tongue-and-groove coupling. The joint of different tubes forms the duct or chimney for transporting fluids, usually combustion gases, through the interior thereof.

However, in these tubes of the state of the art the sealing gasket is exposed on its upper end and, through the use of lipped gaskets, the contact surface between the male tube and the sealing gasket is smaller. These lips on the gaskets facilitate the introduction of the male tube into the female tube, but on the contrary, make it difficult to remove. In order to secure the connection, clamps are used on the gaskets.

In view of the foregoing, i.e. of the configuration of the tubes together with the configuration of the sealing gaskets used, the pressure resisted by the couplings is limited to 5,000 Pa, which is the limit established by the UNE EN 1856 standard in force on the filing date of the present patent application.

However, at times it may be necessary for the tubes to work at higher pressures, for which it is necessary to optimise the coupling systems of the tubes by carrying out modifications in the design of said tubes, such that the coupling can be exposed to higher pressures without losing sealing.

Document FR 2 687 208 A1 discloses a tube for transporting fluids having two mouths, a male mouth and a female mouth, and a wall, comprising: a first section with an annular protrusion or reinforcement and the male mouth on one end, a second section, following the first section, with the female mouth on the end opposite the male mouth defining a chamber, and with an inner diameter slightly larger than the outer diameter of the first section, so that the protrusion of a first tube will lean on the chamber of a second tube when the male mouth of said first tube is inserted inside the female mouth of the second tube.

In view of the state of the art, the applicant is not aware of the existence of any tube or coupling system that solves the aforementioned problems.

### DESCRIPTION OF THE INVENTION

The object of the present invention, a tube for transporting fluids, is a device according to claim 1. A second object, a coupling system, is included in claim 3.

Additional characteristics of the device are included in the dependent claims.

Specifically, the invention proposes a tube and a tube coupling system that enables, with respect to the known systems, simpler manufacture, simpler assembly or coupling between tubes, improved sealing and an improved level of performance of the system upon bearing greater pressures than the current systems, of up to sustained 30,000 Pa, although preferably no more than 26,000 Pa.

The foregoing is achieved due to the fact that a lipless sealing gasket is located on the end of the tube, with adequate dimensions adapted to the tube chamber such that the contact surface is greater than when using lipped gaskets, allowing greater sealing at a higher pressure, in other words, when the pressure increases the coupling is not affected and, thus, neither is sealing between tubes. Likewise, the tubes, once coupled, are secured with a clamp that prevents the separation of the tubes when the pressure increases and which makes the assembly more compact, since it enables the gasket to be pressed by the walls of the female tube chamber and by the lower wall of the male tube protrusion.

In order to achieve these objectives, the tube object of the present invention has two mouths, one on each end, and a wall, with:
- A first section with a male mouth on one end,
- A second section, following the first section, with a female mouth on the end opposite that of the male mouth, and with an inner diameter slightly larger than the outer diameter of the first section, to enable the introduction into the second section of a tube of the first section of another tube.
- A chamber, arranged on the female mouth, to house a sealing gasket, preferably made of silicone, said chamber being determined by a lower wall and a side wall, coincident with the tube wall, and said chamber having an outer diameter and inner diameter larger than the outer diameter of the second section, and
- An annular protrusion or reinforcement, arranged on the exterior of the first section, and determined by a lower wall, an upper wall and a side wall, coincident with the tube wall, wherein the side wall of said protrusion has an outer diameter equal to the outer diameter of the chamber.

The tube preferably has a constant thickness.

With the objective that, upon coupling two identical tubes with the same dimensions in terms of diameters by inserting the male mouth of a first tube inside the female mouth of a second tube, and that the protrusion of the first tube will become located on the chamber of the second tube, the distance between the male mouth and the protrusion of the first section is smaller than the sum of the length of the second section of the tube and the length of the chamber.

Prior to the coupling, and as mentioned earlier, a sealing gasket is introduced inside the chamber, preferably made of silicone, and so that said gasket is perfectly housed inside the chamber after the coupling of two tubes, the lower wall of the annular protrusion, which is located on the chamber after the coupling, has an inclination with respect to the perpendicular of the tube wall.

Therefore, as mentioned earlier, a coupling system according to the present invention comprises at least a first tube and a second tube, having the aforementioned characteristics, and joined by a tongue and groove system, such that the first section of the first tube is introduced in the second section of the second tube, the annular protrusion of the first tube remaining above the chamber of the second tube and determining a housing between the two tubes wherein the sealing gasket, preferably made of silicone, is introduced between the lower wall of the annual protrusion of the first tube, the walls of the chamber and the wall of the first tube.

In order to secure the assembly between the two tubes and also guarantee that the gasket does not move, the system includes a clamp coupled to the upper wall of the annular protrusion and to the lower wall of the chamber.

### BRIEF DESCRIPTION OF THE FIGURES

The following figures, which describe the aspects of the invention in a more detailed manner, are included by way of illustration and not limitation, with the aim of reaching a better understanding thereof.
Figure 1 shows a perspective view of a tube for transporting fluids object of the present invention.
Figure 2 shows an elevation view of the tube of figure 1.
Figure 3 shows a cross sectional detail A of figure 1.
Figure 4 shows a cross sectional detail B of figure 1.
Figure 5 shows a perspective view of a coupling of two tubes according to the present invention.
Figure 6 shows an elevation view of the coupling of figure 5 with a cross section of the coupling area.
Figure 7 shows a cross sectional detail A of the coupling area of figure 6.

### DESCRIPTION OF THE PREFERRED EMBODIMENTS

What follows is a description of the object of the invention making reference to the figures included in the present specification.

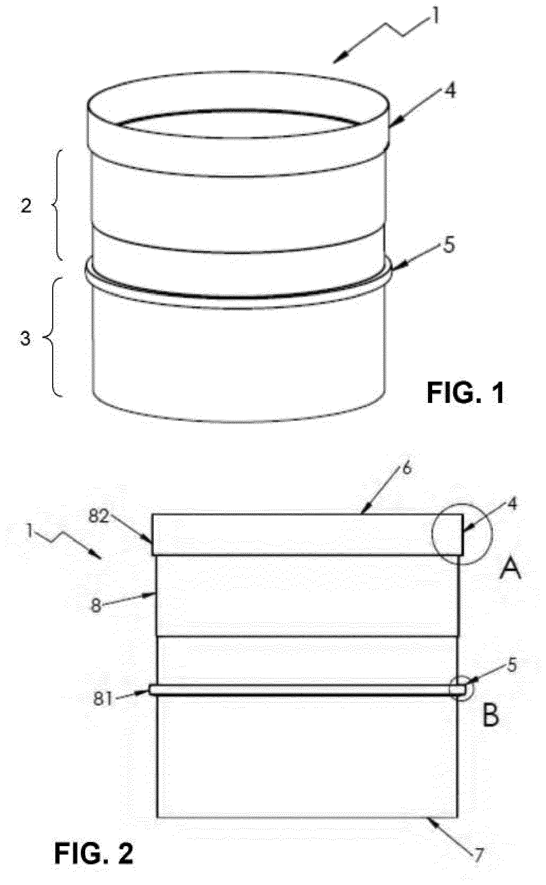

Figures 1 to 2 show a tube (1) with a chamber (4) on one end of the tube (1) determined by the female mouth (6) thereof and an annular protrusion (5) located on the surface (8) of the tube (1), between the chamber (4) and the opposite end of the tube (1) where the female mouth (7) thereof is located. In order to enable the coupling of two tubes to each other, the outer diameter of the male mouth is smaller than the inner diameter of the female mouth, such that a tongue-and-groove coupling is enabled between two tubes. The difference between the two previous diameters may vary according to the use for which the coupled tubes are intended, although preferably this difference is minimal to enable easy assembly while reducing the space between the two tubes as much as possible. Said tube (1) has a preferably constant thickness that varies according to the length and diameter of the tube and that is preferably between 0.4 mm and 0.8 mm. Likewise, the tubes may be straight, preferably 1000 mm or 250 mm, which can be combined with curved sections, for example elbows. The diameters of the tubes may preferably vary between 100 mm and 900 mm. Preferably the tubes are made of stainless steel.

The tube (1) is divided into two sections, a first section (3) with the annular protrusion (5) and with the male mouth (7) on its end that extends up to a change in diameter of the tube (1) and a second section (2) that extends from said change in diameter of the tube (1) to the base of the chamber (4). The protrusion (5) is located on said first section (3). The sum of the length of the second section (2) and the length of the chamber (4) is greater than the distance between the protrusion (5) and the male mouth (7), specifically, greater than the distance from the lower wall (51) of the protrusion (5) to the lower mouth (7). The inner diameter of the second section (2) is slightly greater, in fact nearly equal as mentioned earlier, to the outer diameter of the first section (3), such that a tight-fitting tongue-and-groove coupling is enabled between the first section (3) and the second section (2) of two tubes (100, 200), respectively.

As can be observed in figures 2 to 4, the chamber (4) has a lower wall (41) and a side wall (82) that correspond to the wall (8) of the tube (1). Said chamber (4) is intended to house a sealing gasket (20), preferably made of silicone, such that it prevents the existence of or minimises the fluid leaks that occur in the couplings of the first sections (3) to the second sections (2) of two tubes (100, 200). Said sealing gasket is preferably smooth on all its surfaces for the purpose of increasing the contact surface between it and the tube walls.

Likewise, the protrusion (5) has a lower wall (51), an upper wall (52) and a side wall (81) that correspond to the wall (8) of the tube (1). The lower wall (51) of the protrusion (5) is slightly inclined at an angle α with respect to a perpendicular of the tube wall, forming an acute angle with said perpendicular, preferably of approximately 10°. The objective of the protrusion (5) is, when two tubes (100, 200) are coupled, to become located on the chamber (4) of a second tube (200), whereupon the lower wall (51) of the protrusion (5) will lean on the upper ends of the side wall (82) of the chamber (4), determining a housing (10) between the chamber (4) of the second tube (200), the wall of the first tube (100) and the lower wall (51) of the protrusion (5) located on the first tube (100).

The outer diameter of the protrusion (5), in other words, the diameter of the side wall (81) of the protrusion (5), is equal to the diameter of the side wall (82) of the chamber (4).

The inner diameter of the chamber (4) is larger than the outer diameter of the second section (2), determining the difference in the diameters of the length of the lower wall (41) of the chamber (4), and therefore, the thickness of the sealing gasket (20) that will be introduced inside said chamber (4). The width of said chamber (4), equivalent to the length of the lower wall (41), as well as the height of the side wall (82) thereof, will depend on the application of the tubes and of the sealing and pressure requirements needed, such that said dimensions and, therefore, the dimensions of the sealing gasket (20) will vary according to said requirements.

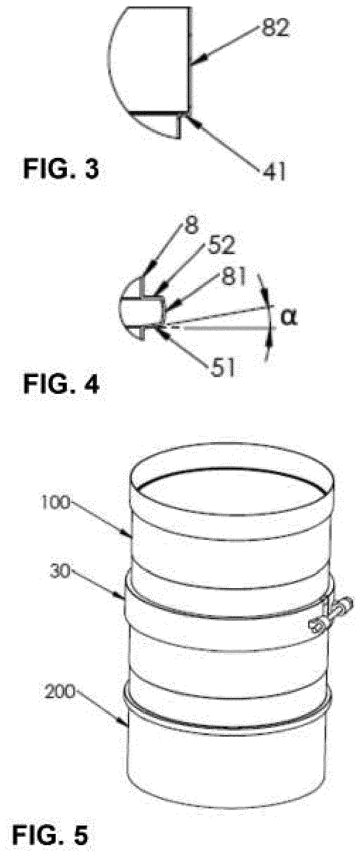

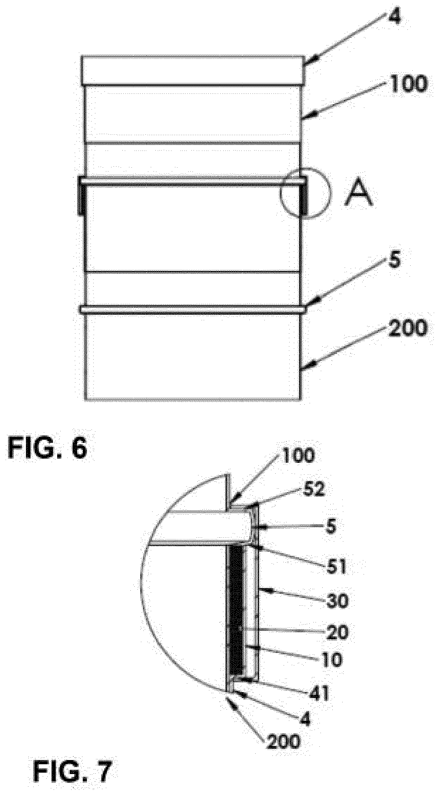

Pursuant to the foregoing, figures 5 to 7 shows a tongue-and-groove coupling of two tubes (100, 200) having the aforementioned characteristics. As mentioned earlier, in order for said coupling to take place in the best conditions, the outer diameter of the first section (3) must be nearly equal to the inner diameter of the second section (2). In fact, the outer diameter of the section (3) must be slightly smaller than the inner diameter of the second section (2) to allow the introduction of the male mouth (7) of the first section (3) of a tube (100) into the second section (2) of a second tube (200) through the female mouth (6) of said second tube (200).

In order to perform said coupling between a first tube (100) and a second tube (200), a sealing gasket (20) is located in the chamber (4) of the second tube (200). Said chamber (4) will form a housing or cavity (10) with the first tube (100) when it is introduced inside the second tube (200), said housing (10) being occupied by the gasket (20).

Once the gasket (20) is introduced inside the chamber (4), the male mouth (7) of the first tube (100) is introduced into the second tube (200) through the female mouth (4) of said second tube. The first tube (100) is introduced into the second tube (200) until the lower wall (51) of the protrusion (5) of the first tube comes into contact with the sealing gasket (20) located in the chamber (4) of the second tube (200). Therefore, the length of the second section (2) plus the height of the side wall (82) of the chamber (4) must be equal to or greater than the distance between the lower wall (51) of the protrusion (5) and the male mouth (7) to enable contact between the lower wall (51) of the protrusion (5) of a tube and the upper wall (82) of the chamber of a second tube.

By means of the previous arrangement, the sealing gasket (20) is pressed on all four sides, guaranteeing the sealing of the assembly:
- Internally by the wall (8) of the first section (3) of the first tube (100),
- Externally by the side wall (82) of the chamber (4) of the second tube (200),
- At the bottom by the lower wall (41) of the chamber (4) of the second tube (200), and
- At the top by the lower wall (51), which is inclined, of the protrusion (5) of the first tube (100).

Subsequently, a clamp (30) is arranged to maintain the coupling between the two tubes (100, 200), such that the clamp (30) leans on the upper wall (52) of the protrusion (5) of the first tube (100) and on the lower wall (41) of the chamber (4) of the second tube (200). Since the diameters of the protrusion (5) and of the chamber (4) are identical and both have walls (52, 41) that serve as a support for the upper and lower arms of the clamp, the clamp is optimally secured to both tubes (100, 200), thereby preventing the movement of one tube with respect to the other and ensuring the resistance of the coupling to pressures of up to 30,000 Pa, although preferably it should not exceed 26,000 Pa.

## Claims

1. A tube (1) for transporting fluids having two mouths, wherein the two mouths are a male mouth (7) and a female mouth (6), and a wall (8), comprising:
- A first section (3) with an annular protrusion or reinforcement (5) and the male mouth (7) on one end,
- A second section (2), following the first section (3), with the female mouth (6) on the end opposite the male mouth (7) defining a chamber (4), and with an inner diameter slightly larger than the outer diameter of the first section (3), wherein:
- Said chamber (4) is located on the female mouth (6), for housing a sealing gasket, and is determined by a lower wall (41), perpendicular to the wall of the tube contiguous to the chamber (4), and a side wall (82), the lower wall (41) and the side wall (82) perpendicular between them and coincident with the tube wall (8), said chamber having an inner diameter larger than the outer diameter of the second section (2), and
- Said annular protrusion or reinforcement (5) is located on the exterior of the first section (3), and determined by a lower wall (51) inclined with respect to a perpendicular to the wall (8) of the tube contiguous to the protrusion (5), an upper wall (52) perpendicular to the wall (8) of the tube contiguous to the protrusion (5), and a side wall (81), wherein the lower wall (51), the upper wall (52) and the side wall (81) are coincident with the tube wall (8), the upper wall (52) and the side wall (81) perpendicular between them, said side wall (81) of said protrusion having an outer diameter equal to the outer diameter of the chamber (4), Wherein the distance between the protrusion (5) and the male mouth (7) is smaller than the sum of the length of the second section (2) and the length of the chamber (4) with the objective that the lower wall (51) of the protrusion (5) of a first tube will lean on the upper ends of the side wall (82) of the chamber (4) of a second tube, when inserting the male mouth (7) of a first tube inside the female mouth (6) of a second tube.

2. The tube (1) according to any of the preceding claims, **characterised in that** the thickness of the tube is constant.

3. A system for coupling tubes **characterised in that** it comprises at least a first (100) and a second tube (200), according to claims 1 to 2, coupled to each other by means of a tongue-and-groove system, **characterised in that** the first section (3) of a first tube (100) is introduced into the second section (2) of the second tube (200), the annular protrusion (5) of the first tube (100) remaining above the chamber (4) of the second tube (200) and determining a housing (10) between the lower side (51) of the annular protrusion (5), the walls of the chamber (4) and the wall (8) of the first tube (100).

4. The system, according to claim 3, **characterised in that** the housing (10) of the chamber (4) contains a sealing gasket (20).

5. The system, according to any of claims 3 and 4, **characterised in that** it comprises a clamp (30) coupled to the upper wall (52) of the annular protrusion (5) of the first tube (100) and to the lower wall (41) of the chamber (4) of the second tube (200).

## Patentansprüche

1. Rohr (1) zum Transportieren von Fluiden, aufweisend zwei Mündungen, wobei die zwei Mündungen eine männliche Mündung (7) und eine weibliche Mündung (6) sind, und eine Wand (8), umfassend:
- einen ersten Abschnitt (3) mit einem ringförmigen Verstärkungsvorsprung (5) und der männlichen Mündung (7) an einem Ende,
- einen zweiten Abschnitt (2), der dem ersten Abschnitt (3) folgt, mit der weiblichen Mündung (6) an dem der männlichen Mündung (7) gegenüberliegenden Ende, die eine Kammer (4) definiert, und mit einem geringfügig größeren Innendurchmesser als der Außendurchmesser Durchmesser des ersten Abschnitts (3),
wobei:
- die Kammer (4) sich auf der weiblichen Mündung (6) zur Unterbringung einer Dichtung befindet und durch eine untere Wand (41), die senkrecht zur Wand des an die Kammer (4) angrenzenden Rohrs verläuft, und eine Seitenwand (82), die untere Wand (41) und die Seitenwand (82) senkrecht dazwischen und zusammenfallend mit der Rohrwand (8) bestimmt wird, wobei die Kammer einen Innendurchmesser aufweist, der größer als der Außendurchmesser des zweiten Abschnitts (2) ist, und
- sich der ringförmige Vorsprung oder Verstärkung (5) auf der Außenseite oder dem ersten Abschnitts (3) befindet und durch eine untere Wand (51) bestimmt wird, die in Bezug auf eine Senkrechte zur Wand (8) des an den Vorsprung (5) angrenzenden Rohrs, eine obere Wand (52) senkrecht zur Wand (8) des Rohrs angrenzend an den Vorsprung (5) und eine Seitenwand (81) geneigt ist, wobei die untere Wand (51), die obere Wand (52) und die Seitenwand (81) mit der Rohrwand (8), der oberen Wand (52) und der Seitenwand (81) senkrecht dazwischen zusammenfallen, wobei die Seitenwand (81) des Vorsprungs einen Außendurchmesser aufweist, der gleich dem Außendurchmesser der Kammer (4) ist,
wobei der Abstand zwischen dem Vorsprung (5) und der männlichen Mündung (7) kleiner ist als die Summe der Länge des zweiten Abschnitts (2) und der Länge der Kammer (4) mit dem Ziel, dass die untere Wand (51) des Vorsprungs (5) oder eines ersten Rohrs auf die oberen Enden der Seitenwand (82) der Kammer (4) eines zweiten Rohrs aufliegt, wenn die männliche Mündung (7) eines ersten Rohrs in die weibliche Mündung (6) eines zweiten Rohrs eingeführt wird.

2. Rohr (1) nach einem der vorhergehenden Ansprüche, **dadurch gekennzeichnet, dass** die Dicke des Rohrs konstant ist.

3. System zum Koppeln von Rohren, **dadurch gekennzeichnet, dass** es mindestens ein erstes (100) und ein zweites Rohr (200) nach den Ansprüchen 1 bis 2 umfasst, die miteinander mittels eines Nut-und-Feder-Systems gekoppelt sind, **dadurch gekennzeichnet, dass** der erste Abschnitt (3) eines ersten Rohrs (100) in den zweiten Abschnitt (2) des zweiten Rohrs (200) eingeführt wird, wobei der ringförmige Vorsprung (5) des ersten Rohrs (100) über der Kammer (4) des zweiten Rohrs (200) verbleibt und ein Gehäuse (10) zwischen der unteren Seite (51) des ringförmigen Vorsprungs (5), den Wänden der Kammer (4) und der Wand (8) des ersten Rohrs (100) bestimmt.

4. System nach Anspruch 3, **dadurch gekennzeichnet, dass** das Gehäuse (10) der Kammer (4) eine Dichtung (20) enthält.

5. System nach einem der Ansprüche 3 und 4, **dadurch gekennzeichnet, dass** es eine Klammer (30) umfasst, die mit der oberen Wand (52) des ringförmigen Vorsprungs (5) des ersten Rohrs (100) und der unteren Wand (41) der Kammer (4) des zweiten Rohrs (200) gekoppelt ist.

## Revendications

1. Tube (1) pour le transport de fluides ayant deux embouchures, dans lequel les deux embouchures sont une embouchure mâle (7) et une embouchure femelle (6), et une paroi (8), comprenant :
- une première section (3) avec une protubérance annulaire ou renfort (5) et l'embouchure mâle (7) sur une extrémité,
- une seconde section (2), suivant la première section (3), avec l'embouchure femelle (6) sur l'extrémité opposée à l'embouchure mâle (7) définissant une chambre (4), et avec un diamètre interne légèrement plus grand que le diamètre externe de la première section (3),
dans lequel :
- ladite chambre (4) est située sur l'embouchure femelle (6), pour loger un joint d'étanchéité, et est déterminée par une paroi inférieure (41), perpendiculaire à la paroi du tube contigu à la chambre (4), et une paroi latérale (82), la paroi inférieure (41) et la paroi latérale (82) étant perpendiculaires entre elles et coïncidant avec la paroi tubulaire (8), ladite chambre ayant un diamètre interne plus grand que le diamètre externe de la seconde section (2), et
- ladite protubérance annulaire ou renfort (5) est située à l'extérieur de la première section (3), et est déterminée par une paroi inférieure (51) inclinée par rapport à une perpendiculaire à la paroi (8) du tube contigu à la protubérance (5), une paroi supérieure (52) perpendiculaire à la paroi (8) du tube contigu à la protubérance (5), et une paroi latérale (81), dans lequel la paroi inférieure (51), la paroi supérieure (52) et la paroi latérale (81) coïncident avec la paroi tubulaire (8), la paroi supérieure (52) et la paroi latérale (81) étant perpendiculaires entre elles, ladite paroi latérale (81) de ladite protubérance ayant un diamètre externe égal au diamètre externe de la chambre (4),
dans lequel la distance entre la protubérance (5) et l'embouchure mâle (7) est plus petite que la somme de la longueur de la seconde section (2) et de la longueur de la chambre (4) ayant pour objectif que la paroi inférieure (51) de la protubérance (5) ou un premier tube s'appuie sur les extrémités supérieures de la paroi latérale (82) de la chambre (4) d'un second tube, lors de l'insertion de l'embouchure mâle (7) d'un premier tube à l'intérieur de l'embouchure femelle (6) d'un second tube.

2. Tube (1) selon l'une quelconque des revendications précédentes, **caractérisé en ce que** l'épaisseur du tube est constante.

3. Système de couplage de tubes **caractérisé en ce qu'**il comprend au moins un premier (100) et un second tube (200), selon les revendications 1 à 2, couplés l'un à l'autre au moyen d'un système à rainure et languette, **caractérisé en ce que** la première section (3) d'un premier tube (100) est introduite dans la seconde section (2) du second tube (200), la protubérance annulaire (5) du premier tube (100) restant au-dessus de la chambre (4) du second tube (200) et déterminant un logement (10) entre la face inférieure (51) de la protubérance annulaire (5), les parois de la chambre (4) et la paroi (8) du premier tube (100).

4. Système, selon la revendication 3, **caractérisé en ce que** le logement (10) de la chambre (4) contient un joint d'étanchéité (20).

5. Système, selon l'une quelconque des revendications 3 et 4, **caractérisé en ce qu'**il comprend une pince (30) couplée à la paroi supérieure (52) de la protubérance annulaire (5) du premier tube (100) et à la paroi inférieure (41) de la chambre (4) du second tube (200).
